# EUROPÄISCHE PATENTSCHRIFT

(11) **EP 1 777 384 B1**
(45) Veröffentlichungstag und Bekanntmachung des Hinweises auf die Patenterteilung: **27.02.2008**
(21) Anmeldenummer: 06019136.8
(22) Anmeldetag: 13.09.2006
(51) Int. Cl.: F01N 3/023, F01N 3/36, F01N 9/00, F01N 7/02

(54) **Verfahren zur Vermeidung von unerwünschten NO2-Emissionen bei Brennkraftmaschinen**
Method avoiding unwanted NO2 emissions from internal combustion engines
Procédé pour éviter des émissions indésirées NO2 des moteurs à combustion interne

(30) Priorität: 18.10.2005 DE 102005049655
(43) Veröffentlichungstag der Anmeldung: 25.04.2007
(73) Patentinhaber: MAN Nutzfahrzeuge Aktiengesellschaft, 80995 München (DE)
(72) Erfinder: Döring, Andreas, 80339 München (DE)

(56) Entgegenhaltungen:
- WO-A-00/34632
- DE-A1- 10 243 488

## Beschreibung

Gegenstand der Erfindung ist ein Verfahren zur Verringerung unerwünschter NO₂-Emissionen von bei Luftüberschuss betriebenen Brennkraftmaschinen die in Ihrem Abgasstrang mit wenigstens einem Katalysator mit NO-Oxidationsaktivität ausgerüstet sind, wobei der Katalysator mit NO-Oxidationsaktivität dazu dient, den Anteil an NO₂ im Abgas der Brennkraftmaschine für nachgeordnete Abgasnachbehandlungsverfahren zu erhöhen.

Für eine Vielzahl von Abgasnachbehandlungsmaßnahmen in sauerstoffreichem Abgas von Brennkraftmaschinen ist Stickstoffdioxid ein Schlüsselmolekül. So wird Stickstoffdioxid, wie in der EP 0341832 A1 oder DE 102 43 488 A1 beschrieben, beispielsweise zur Oxidation von Ruß in Partikelfiltem verwendet. Auch dient es zur Beschleunigung der selektiven katalytischen Reduktion von Stickoxiden mit Hilfe von Harnstoff, Ammoniak und Kohlenwasserstoffen wie dies den Druckschriften EP 1054722 A1, JP2000225323 und US20020064956 zu entnehmen ist. Für die NOx-Speicherkatalysatortechnologie wird es benötigt, um NOx in mageren Phasen als Nitrat einspeichern zu können, derartige Verfahren sind in den Druckschriften DE 19636041 A1, JP 19990220418 beschrieben.

Das für diese Technologien notwendige NO₂ wird dabei an platinhaltigen Katalysatoren aus dem vom Motor emittierten Stickstoffmonoxid nach der folgenden Gleichung erzeugt.

*2 NO* + *O₂* ↔ *2NO₂* *Gleichung 1*

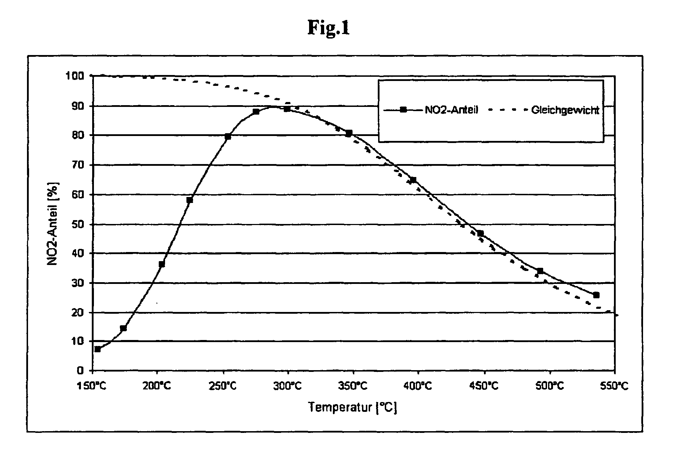

Je nach Ausführung der Katalysatoren, Platingehalt und Anwendungsfall weisen die Katalysatoren Anspringtemperaturen zwischen 180°C - 330°C auf. Als Anspringtemperatur bezeichnet man hierbei diejenige Temperatur, bei der 50% des Stickstoffmonoxids zu Stickstoffdioxid oxidiert wird. Allerdings ist zu beachten, dass der NO₂-Anteil an den Gesamtstickoxiden mit steigender Temperatur wieder zurückgeht, da bei hohen Temperaturen das thermodynamische NO/NO₂-Gleichgewicht auf der Seite von NO liegt. Der diesbezügliche Zusammenhang ist zum besseren Verständnis in Fig. 1 schaubildlich dargestellt. Mit steigender Raumgeschwindigkeit, bzw. sinkender Verweilzeit über den Katalysator ist ebenfalls ein Rückgang der NO₂-Konzentrationen zu beobachten.

Da die gesetzlich vorgeschriebenen Abnahmezyklen von Fahrzeugen und Motoren meist Tieftemperaturbereiche vorsehen, in denen die Grenzwerte einzuhalten sind, werden die Katalysatoren so ausgelegt, dass sie bereits bei niedrigen Temperaturen hohe NO₂-Anteile darstellen können. Ansonsten wäre kaum eine der vorstehend angesprochenen Technologien zur Abgasnachbehandlung bei diesen Temperaturen zu betreiben. So ist es beispielsweise bei 200°C nur mit Hilfe von Stickstoffdioxid möglich akzeptable Umsätze bei der Reduktion von Stickoxiden mit Hilfe von Ammoniak nach der Gleichung

*NO*+*NO₂*+*2NH₃* → *2N₂*+*3H₂O* *Gleichung 2*

darzustellen.
Ebenso ist die Oxidation von kohlenstoffhaltigen Partikeln unter 350°C nur mit Hilfe von NO₂ nach der Gleichung

*NO₂*+*C* → *NO+CO* *Gleichung 3*

mit akzeptablen Stoffmengenänderungsgeschwindigkeiten möglich. Die hohen NO₂-Konzentrationen bei niedrigen Temperaturen bedeuten allerdings, dass bei höheren Temperaturen meist mehr NO₂ generiert, als benötigt wird. Dies führt zum Hauptproblem der NO₂-basierten Technologien, es kommt zur Emission von unverbrauchtem NO₂. NO₂ ist ein toxisches Molekül, das zu Verätzungen der Atemwege führen kann. Zudem reagiert es in der Atmosphäre mit Sauerstoff zu Ozon und erhöht damit die Ozonkonzentration in Bodennähe.
Dies ist besonders im Innenstadtbereich problematisch, da hier die Ozonkonzentrationen erheblich ansteigen können und so ebenfalls zu Atemwegs- und Kreislaufbeschwerden beitragen.

Ein weiteres Problem besteht darin, dass die Abgasgrenzwerte nicht nur im Neuzustand der Brennkraftmaschine bzw. des Fahrzeugs einzuhalten sind, sondern auch noch nach einer gewissen Laufzeit. Da sich Katalysatoren üblicherweise über die Laufzeit durch chemische Deaktivierung, thermische Belastungen usw. in ihrer Wirkung verschlechtem, werden die Katalysatoren so ausgelegt, dass sie die Grenzwerte auch nach der vorgeschriebenen Laufzeit noch einhalten. Dies bedeutet allerdings, dass sie überproportional groß ausgelegt werden, was im Falle von Katalysatoren mit NO₂-Oxidationsaktivität bedeutet, dass sie im Frischzustand deutlich mehr NO₂ generieren, als notwendig wäre. Es besteht also ein Zielkonflikt zwischen guter Performance des Nachbehandlungssystems bei tiefen Temperaturen und langer Laufzeit sowie der unerwünschten NO₂-Emission bei höheren Temperaturen und frischem Katalysator.

Aufgabe der Erfindung ist es deshalb, ein Verfahren anzugeben, das die NO₂ Emission sicher verhindert, ohne die Wirkungsweise und den Wirkungsgrad des jeweils eingesetzten Abgasnachbehandlungssystems negativ zu beeinflussen.

Gelöst wird die Aufgabe durch die kennzeichnenden Merkmale des Anspruches 1, vorteilhafte Ausgestaltungen des erfindungsgemäßen Verfahrens sind in den abhängigen Ansprüchen gekennzeichnet.

Die erfindungsgemäße Lösung sieht zur Verringerung unerwünschter NO₂-Emissionen bei Anordnungen der gattungsgemäßen Art ein Verfahren vor, das während des Betriebs der Brennkraftmaschine, dem jeweiligen Betriebspunkt der Brennkraftmaschine und dem Zustand des Katalysators mit NO-Oxidationsaktivität angepasst, der Anteil von Stoffen variiert, die mit der NO-Oxidation konkurrieren, derart, dass stromab des Katalysators mit NO-Oxidationsaktivität nur der NO₂-Sollanteil im Abgas vorhanden ist, der für die nachfolgende Abgasnachbehandlung benötigt wird. Es wird dadurch in vorteilhafter Weise erreicht, dass höhere als die benötigten NO₂-Anteile erst gar nicht entstehen.

Der dabei verwendete Katalysator mit NO-Oxidationsaktivität weist vorteilhaft als eine Aktivkomponente Platin und/oder Platinoxid auf.

Eine günstige Möglichkeit die Stoffe, die mit der NO-Oxidation konkurrieren in das System einzubringen besteht darin, dies über die Brennkraftmaschine zu bewerkstelligen, wodurch eine homogene Verteilung im Abgas ohne zusätzlichen Aufwand erreicht wird.

Weiter besteht die Möglichkeit die Variation des Anteils der Stoffe, die mit der NO-Oxidation konkurrieren durch deren Zugabe stromab der Brennkraftmaschine und stromauf des Katalysators mit NO-Oxidationsaktivität in das Abgas der Brennkraftmaschine zu bewirken. Der Vorteil bei dieser Vorgehensweise besteht darin, dass die motorischen Abläufe nicht beeinflusst werden.

Die erfindungsgemäß zugegebenen Stoffe, die mit der NO-Oxidation konkurrieren, können Kohlenwasserstoffe sein, dabei ist es insbesondere von Vorteil den zum Betreiben der Brennkraftmaschine verwendeten, aus Kohlenwasserstoffen bestehenden Kraftstoff zu nutzen. Geschehen kann dies dadurch, dass die Kohlenwasserstoffkonzentration im Abgas der Brennkraftmaschine durch Variation von Motorparametern, wie Spritzbeginn, und/oder Einspritzdruck und/oder AGR-Rate und/oder Stellung einer Drosselklappe auf der Saugseite und/oder abgesetzten Einspritzungen, verändert wird.

Zur technischen Umsetzung des erfindungsgemäßen Verfahrens ist es vorteilhaft, eine elektronische Steuereinheit vorzusehen, die mit Hilfe von an ihr angeschlossener Sensoren und/oder mit Hilfe von in ihr in Form von Rechenschritten gespeicherter Bestimmungsmodelle und/oder mit Hilfe von in ihr gespeicherter Kennfelder die vom jeweiligen Betriebspunkt der Brennkraftmaschine abhängigen benötigten NO₂-Sollanteile ermittelt. Entsprechend der ermittelten NO₂-Sollanteile steuert die elektronische Steuereinheit das Stellglied oder die Stellglieder an, die den Anteil des Stoffes, der mit der NO-Oxidation konkurrieren, im Abgas vor dem Katalysator mit NO-Oxidationsaktivität variieren. Die Ansteuerung erfolgt dabei so, dass sich der benötigte NO₂-Sollanteil im Abgas stromab des Katalysators mit NO-Oxidationsaktivität einstellt. Derartige elektronische Steuereinheiten, die in der Lage sind komplexe Steuerungsprogramme abzuarbeiten werden ohnehin für die Steuerung der Brennkraftmaschine eingesetzt und können zur Durchführung des erfindungsgemäßen Verfahrens verwendet werden.

Für die Ermittlung der NO₂-Sollanteile und für die Ansteuerung des Stellgliedes oder der Stellglieder sind eine Vielzahl von Größen verwendbar, die bereits von der elektronischen Steuereinheit zur Steuerung der Brennkraftmaschine erfasst werden oder ohne großen Aufwand erfassbar sind. Weiter kann auf Bestimmungsmodelle zurückgegriffen werden die bereits in Form von Programmen in der Steuereinheit implementiert oder einfach in diese implementierbar sind. Bei den vorgenannten Größen und Bestimmungsmodellen von denen wenigstes eine bzw. wenigstens eines zur Ermittlung der NO₂-Sollanteile und für die Ansteuerung des Stellgliedes herangezogen wird, kann es sich z. B. um die gesamte Abgasmenge, Kohlenwasserstofflconzentration im Abgas vor dem Katalysator mit NO-Oxidationsaktivität, die Rohemission von NO und/oder NOx, die Rohemission der zu verringernden Abgasbestandteile, die maximal zulässige Restemission der zu verringernden Abgasbestandteile stromab der Abgasnachbehandlung, die maximal zulässige Restemission von NO₂ stromab der Abgasnachbehandlung, die maximal zulässige Restkonzentration der zugegebenen Stoffe stromab des Katalysators mit NO-Oxidationsaktivität, die maximal zulässige Restemission der zugegebenen Stoffe stromab des Nachbehandlungssystems, die Katalysatortemperaturen, die Abgastemperaturen, das Katalysatormodell zur Bestimmung der NO₂-Umsätze im Katalysator mit NO-Oxidationsaktivität, das Katalysatormodell zur Bestimmung der Umsatzraten der in der Abgasnachbehandlung zu verringernden Abgasbestandteile, die Motordrehzahl, den Ladedruck, die Kraftstoffmenge, die Katalysatoralterung über die Laufzeit, die NO₂-Istkozentration und/oder den NO₂-Istanteil nach dem Katalysator mit NO-Oxidationsaktivität, die NO₂-Restkonzentration und/ oder den NO₂-Restanteil des Abgases stromab des Abgasnachbehandlungssystems handeln.

Die für eine direkte Regelung der NO₂-Sollanteile vorteilhaft verwendbare NO₂-Istkonzentration und/oder der NO₂-Istanteil und/ oder die NO₂-Restkonzentration und/ oder der NO₂-Restanteil lassen sich mittels eines oder mehrerer Sensoren ermitteln. Die Bestimmung der NO₂-Istkonzentration bzw. des NO₂-Istanteils im Abgasstrom erfolgt dabei zwischen dem Katalysator mit NO-Oxidationsaktivität und der nachfolgenden Anordnung zur Abgasnachbehandlung, während die NO₂-Restkonzentration und/oder der NO₂-Restanteils im Abgasstrom stromab zu der Anordnung zur Abgasnachbehandlung erfasst werden.

Mit der NO₂-Istkonzentration und/oder dem NO₂-Istanteil als Istwert bzw. der NO₂-Restkonzentration und/oder dem NO₂-Restanteil als Istwert lässt sich in einfacher und damit vorteilhafter Weise ein geschlossener Regelkreis realisieren, der durch kontinuierlichen Istwert-Sollwert-Vergleich und kontinuierliches Nachführen des Stellglieds oder der Stellglieder, die die Menge des zugeführten Stoffes variieren, den NO₂-Sollwert einstellt.

Eine weitere vorteilhafte Möglichkeit, eine direkte Regelung der NO₂-Sollanteile zu realisieren besteht darin, die mittels eines oder mehrerer Sensoren ermittelte Kohlenwasserstoffkonzentration im Abgas als Istwert in einem geschlossenen Regelkreis zu nutzen und mittels des Regelkreis durch kontinuierlichen Istwert-Sollwert-Vergleich und kontinuierliches Nachführen des Stellglieds oder der Stellglieder die vom Sensor ermittelte Kohlenwasserstoffkonzentration an deren Sollwert heranzuführen und damit den korrekten NO₂-Sollwert einzustellen. Die Kohlenwasserstoffkonzentration kann dabei sowohl zwischen dem Katalysator mit NO-Oxidationsaktivität und der Anordnung für die Abgasnachbehandlung, als auch stromab zu der Anordnung für die Abgasnachbehandlung erfasst werden, selbstverständlich sind dabei abhängig vom Erfassungsort unterschiedliche Sollwerte im Regelkreis vorzugeben.

Wie oben ausgeführt ist es von besonderem Vorteil, bei Fahrzeugen mit gattungsgemäßen Brennkraftmaschinen die im Kraftstoff enthaltenen Kohlenwasserstoffe für das erfindungsgemäße Verfahren zu nutzen. Dabei wird auf den bekannten Effekt zurückgegriffen, dass unverbrannte Kohlenwasserstoffe im Abgas, die NO₂-Ausbeute über Katalysatoren mit NO-Oxidationsaktivität deutlich verschlechtern (Chemie Ingenieur Technik (72) 2000 S. 441-449, W. Weisweiler: "Entfernung von Stickoxiden aus Sauerstoff enthaltenden Automobilabgasen"). Dieser Effekt wurde bisher als unerwünscht angesehen, da dadurch größere Katalysatoren oder höhere Edelmetallgehalte notwendig wurden. Das erfindungsgemäße Verfahren nutzt nun diesen Effekt bewusst aus, um die NO₂-Ausbeute so zu steuern oder zu regeln, dass immer nur die Menge an NO₂ entsteht, die das nachgeordnete Abgasnachbehandlungssystem tatsächlich benötigt. Die NO₂-Emission kann damit in allen Betriebszuständen der Brennkraftmaschine unter Berücksichtigung des Zustandes des Katalysators mit NO-Oxidationsfähigkeit auf einem Minimum gehalten werden.

In Fahrzeugen ist es, wie bereits dargelegt, sinnvoll, die für die Absenkung der NO₂-Anteile notwendigen Kohlenwasserstoffe aus dem mitgeführten kohlenwasserstoffhaltigen Kraftstoff zu gewinnen. Dies kann beispielsweise durch eine Verstellung der Kraftstoffeinspritzung über eine elektronische Kontrolleinheit (Electronic Control Unit - ECU) dargestellt werden. So ist es möglich, durch eine Verstellung des Einspritzzeitpunkte's und/oder des Einspritzdrucks die Emissionen an unverbrannten Kohlenwasserstoffen zu beeinflussen. Eine weitere Möglichkeit besteht darin, dass Luft/Kraftstoff-Verhältnis, beispielsweise durch Drosselung der Saugluft, abzusenken, was zu einem Anstieg der Kohlenwasserstoffemissionen führt. Ist eine externe Abgasrückführung angebracht, kann über die Variation der Abgasrückführrate ebenfalls die Emission von Kohlenwasserstoffen verändert werden. Ebenso ist es möglich, abgesetzte Einspritzungen zu verwenden: Dabei wird relativ spät nach der eigentlichen Haupteinspritzung eine zweite Einspritzung vorgenommen. Da auf Grund der Expansion des Brennraumes dieser bereits stark abgekühlt ist, findet keine vollständige Verbrennung des Kraftstoffes mehr statt und es kommt zu erheblichen Emissionen von Kohlenwasserstoffen.

Den Verfahren, die den notwendigen Anteil an unverbranntem Kohlenwasserstoff im Abgas vor dem Katalysator mit NO-Oxidationsaktivität durch Beeinflussung des Verbrennungsvorganges im Zylinder erreichen, ist der Nachteil gemeinsam, dass es zum Auftreffen von Kraftstoff auf die Zylinderwandungen kommen kann. Dies führt zu Ölverdünnung und/oder zu Verschlackungen der Laufbuchse. Es kann deshalb durchaus sinnvoll sein, die Kohlenwasserstoffe nicht über die Brennkraftmaschine zu erzeugen, sondern diese über eine separate Zumesseinrichtung vor dem Katalysator mit NO-Oxidationsaktivität, aber nach Austritt aus dem Zylinderraum, zuzuführen.

Es ist an dieser Stelle darauf hinzuweisen, dass natürlich Technologien zur Abgasreinigung bekannt sind, die auf der Zuführung von Kohlenwasserstoffen basieren. So werden z. B. bei der NOx-Speicher-Technologie, Kohlenwasserstoffe und Kohlenmonoxid in den Fettphasen zur Regeneration des NOx-Speichers benötigt. Von dieser Technologie unterscheidet sich das erfindungsgemäße Verfahren einerseits dadurch, dass der Katalysator mit NO-Oxidationsaktivität, im Gegensatz zu einem NOx-Speicherkatalysator, auch bei der Zugabe von Kohlenwasserstoffen mit Luftüberschuss betrieben wird, andererseits wird der Anteil an nicht verbrannten Kohlenwasserstoffen nicht zur Minimierung der NO₂-Emission herangezogen.

Eine weitere Abgasreinigungstechnologie, bei der hohe Kohlenwasserstoffemissionen verwendet werden, ist das sogenannte HC-SCR-Verfahren. Dabei werden Stickoxide mit Hilfen von Kohlenwasserstoff katalytisch reduziert. Das erfindungsgemäße Verfahren unterscheidet sich ebenfalls grundlegend von dem erfindungsgemäßen Verfahren. Zum einen liegen bei der HC-SCR-Reaktion an platinhaltigen Katalysatoren die NOx-Umsatzmaxima bei niedrigen Temperaturen (<250°C) (MTZ (57) 1996. S. 506-514, " NOx-Verminderung bei Dieselmotoren, Teil 1: Modellgasuntersuchungen mit stickstofffreien Reduktionsmitteln" T. Wahl, E. Jacob, W. Weisweiler) so dass das Verfahren nur bei Temperaturen zwischen 200°C und 300°C sinnvoll angewendet werden kann. Demgegenüber wird das erfindungsgemäße Verfahren typischerweise dazu verwendet, die NO₂-Anteile bei höheren Temperaturen von 280-400°C abzusenken. Ein weiterer Unterschied besteht in der Konzentration der Kohlenwasserstoffe, während für das HC-SCR-Verfahren hohe Überschüsse von Kohlenwasserstoffen im Verhältnis zu den zu reduzierenden Stickoxiden notwendig sind (typischerweise die 5-15-fache Menge), liegen die Kohlenwasserstoffkonzentrationen bei dem erfindungsgemäßen Verfahren unter denen für NOx. Zudem kommen für das HC-SCR-Verfahren meist kurzkettige Kohlenwasserstoffe zum Einsatz, die entweder separat mitgeführt oder durch Cracken aus dem Kraftstoff gewonnen werden müssen (Chem. Eng. Techn. (70) 1999 (10) S. 749-753 " Catalytic cracking of n-dodecane an diesel fuel to improve the selective catalytic reduction of NOx in automotive exhausts containing excess oxygen" S. Kurze, W. Weisweiler).

In Verbindung mit Partikelfiltern ist es schließlich bekann, zur aktiven Regeneration Kohlenwasserstoffe zuzuführen um kurzzeitig die Abgastemperatur stark zu erhöhen und dadurch die Oxidation der angelagerten Rußpartikel zu bewerkstelligen. Auch bei dieser Technologie wird der Anteil an nicht verbrannten Kohlenwasserstoffen nicht zur Minimierung der NO₂-Emission herangezogen.

Um die korrekte Menge an Kohlenwasserstoffen zur Einstellung der NO₂-Sollanteile zuzugeben, ist für den Katalysator mit NO-Oxidationsaktivität und/oder das komplette Nachbehandlungssystem eine Bestimmung bzw. Berechnung der NO₂-Ist- und -Sollanteile notwendig. Dabei sind die NO₂-Sollanteile so zu wählen, dass der gewünschte Umsatz der unerwünschten Abgaskomponenten, wie NOx oder Ruß, bei minimalen NO₂-Emissionen hinter dem Gesamtsystem dargestellt werden kann. Hierzu werden vorab an Prüfständen entsprechende Modelle erarbeitet und diese in eine elektronische Kontrolleinheit (Electronic Control Unit - ECU) übertragen. Diese bestimmt dann zur Laufzeit der Brennkraftmaschine die optimalen NO₂-Anteile. Dabei gehen in das NO₂-Sollmodell wenigstens eine der folgenden Größen bzw. eines der Bestimmungsmodelle ein:
- die gesamte Abgasmenge,
- Kohlenwasserstoffkonzentration im Abgas vor dem Katalysator mit NO-Oxidationsaktivität,
- die Rohemission von NO und/oder NOx,
- die Rohemission der zu verringernden Abgasbestandteile,
- die maximal zulässige Restemission der zu verringernden Abgasbestandteile stromab der Abgasnachbehandlung,
- die maximal zulässige Restemission von NO₂ stromab der Abgasnachbehandlung,
- die maximal zulässige Restkonzentration der zugegebenen Stoffe stromab des Katalysators mit NO-Oxidationsaktivität,
- die maximal zulässige Restemission der zugegebenen Stoffe stromab des Nachbehandlungssystems,
- die Katalysatortemperaturen,
- die Abgastemperaturen,
- das Katalysatormodell zur Bestimmung der NO₂-Umsätze im Katalysator mit NO-Oxidationsaktivität,
- das Katalysatormodell zur Bestimmung der Umsatzraten der in der Abgasnachbehandlung zu verringernden Abgasbestandteile (beschrieben in EP 0498598 A1, DE 4315278 A1 und EP 98114698 A1),
- die Motordrehzahl,
- der Ladedruck,
- die Kraftstoffmenge,
- die Katalysatoralterung über die Laufzeit,
- die NO₂-Istkozentration und/ oder der NO₂-Istanteil nach dem Katalysator mit NO-Oxidationsaktivität,
- die NO₂-Restkonzentration und/ oder der NO₂-Restanteil des Abgases stromab des Abgasnachbehandlungssystems.

Einige dieser Größen können mit Hilfe von Sensoren direkt bestimmt werden, wie z. B. die Abgasmenge mit Hilfe eines Durchflussmessgerätes oder die NOx-Rohemissionen mit Hilfe eines NOx-Sensors. Aber auch eine indirekte Bestimmung über geeignete Modelle und leichter zugängliche Messdaten ist möglich, wie dies bereits in der DE 4315278 A1 beschrieben ist. Ein Beispiel dafür wäre die Bestimmung der Kraftstoffmasse aus der Drehzahl der Brennkraftmaschine, der Zylinderanzahl und der Kraftstoffeinspritzmenge pro Hub. Aber auch eine Bestimmung mit Hilfe von Kennfeldern ist denkbar:
- NOx-Rohemissionen aus Motordrehzahl und Motorlast
- NO-Rohemissionen aus Motordrehzahl und Motorlast
- NO₂-Umsatz aus Abgasmenge und Katalysatortemperatur, gegebenenfalls zusätzlich NOx-Rohemission
- Sollmenge der zu verringernden Abgaskomponenten aus Motordrehzahl und Motorlast, gegebenenfalls Abgasmenge

Mit Hilfe der dadurch ermittelten NO₂-Sollmenge, kann die zuzuführende Menge an Kohlenwasserstoffen bestimmt und mittels der ECU durch Veränderung von Motorparametern, wie Spritzbeginn, AGR-Rate, Einspritzdruck oder Drosselklappenstellung eingestellt oder aber vor dem Katalysator mit NO-Oxidationsaktivität Kohlenwasserstoffe eingedüst werden, wodurch die NO₂-Anteile variiert werden können.

Steht eine geeignete NO2-Sensorik, wie sie beispielsweise in den Druckschriften EP 1384069 A1, JP 19980118026, JP 19970296435 und US 20020064956 beschrieben, zur Verfügung, kann anstelle eines gesteuerten Betriebs auch ein geschlossener Regelkreis aufgebaut werden. Dabei werden die NO₂-Istanteile ständig mit Hilfe der variablen Kohlenwasserstoffkonzentrationen den NO₂-Sollanteilen nachgeregelt. Die dazu eingesetzte NO₂-Sensorik kann sowohl direkt stromab des Katalysators mit NO-Oxidationsaktivität und noch vor Komponenten zur Abgasnachbehandlung, wie SCR-Katalysator oder Partikelfilter, als auch stromab der gesamten Nachbehandlungseinrichtungen, aber noch vor Austritt in die Atmosphäre angebracht werden. Anstelle von NO₂-Sensoren ist auch der Einbau einer Sensorik zur Bestimmung der Kohlenwasserstofflconzentration möglich wie sie in der DE 19991012102 A1 beschrieben ist.

Selbstverständlich stellen die vorstehenden Aspekte nur Beispiele dar, dem Fachmann ist es unter Einsatz des ihm verfügbaren Wissens möglich das erfindungsgemäße Verfahren auf vielfältige Weise auszugestalten

## Patentansprüche

1. Verfahren zur Verringerung unerwünschter NO₂-Emissionen von bei Luftüberschuss betriebenen Brennkraftmaschinen die in Ihrem Abgasstrang mit wenigstens einem Katalysator mit NO-Oxidationsaktivität ausgerüstet sind, wobei der Katalysator mit NO-Oxidationsaktivität dazu dient, den Anteil an NO₂ im Abgas der Brennkraftmaschine für nachgeordnete Abgasnachbehandlungsverfahren zu erhöhen **dadurch gekennzeichnet, dass** während des Betriebs der Brennkraftmaschine, dem jeweiligen Betriebspunkt der Brennkraftmaschine und dem Zustand des Katalysators mit NO-Oxidationsaktivität angepasst, der Anteil von Stoffen variiert wird, die mit der NO-Oxidation konkurrieren, derart, dass stromab des Katalysators mit NO-Oxidationsaktivität nur der NO₂-Sollanteil im Abgas vorhanden ist, der für die nachfolgende Abgasnachbehandlung benötigt wird.

2. Verfahren nach Anspruch 1, **dadurch gekennzeichnet, dass** der Katalysator mit NO-Oxidationsaktivität als eine Aktivkomponente Platin und/oder Platinoxid enthält.

3. Verfahren nach Ansprüchen 1 oder 2, **dadurch gekennzeichnet, dass** die Variation des Anteils der Stoffe über die Brennkraftmaschine erfolgt.

4. Verfahren nach Ansprüchen 1 oder 2, **dadurch gekennzeichnet, dass** die Variation des Anteils der Stoffe durch die Zugabe der Stoffe stromab der Brennkraftmaschine und stromauf des Katalysators mit NO-Oxidationsaktivität in das Abgas der Brennkraftmaschine erfolgt.

5. Verfahren nach einem der vorhergehenden Ansprüche, **dadurch gekennzeichnet, dass** die Stoffe Kohlenwasserstoffe sind.

6. Verfahren nach einem der vorhergehenden Ansprüche, **dadurch gekennzeichnet, dass** die Kohlenwasserstoffe unverbrannter Kraftstoff sind.

7. Verfahren nach einem der vorhergehenden Ansprüche, **dadurch gekennzeichnet, dass** die Kohlenwasserstoffkonzentration im Abgas der Brennkraftmaschine durch Variation von Motorparametem, wie Spritzbeginn, und/oder Einspritzdruck und/oder AGR-Rate und/oder Stellung einer Drosselklappe auf der Saugseite und/oder abgesetzten Einspritzungen, verändert wird.

8. Verfahren nach einem der vorhergehenden Ansprüche, **dadurch gekennzeichnet dass** die NO₂-Sollanteile in einer elektronische Steuereinheit mit Hilfe von Sensoren und/oder Berechnungen und/oder Kennfeldern ermittelt und dementsprechend die Stellglieder von der elektronischen Steuereinheit angesteuert werden, wobei mittels der Stellglieder der Anteil des Stoffes im Abgas vor dem Katalysator mit NO-Oxidationsaktivität variierbar ist, derart, dass sich nach dem Katalysator mit NO-Oxidationsaktivität der NO₂-Sollwert einstellt.

9. Verfahren nach einem der vorhergehenden Ansprüche, **dadurch gekennzeichnet, dass** für die Ermittlung der NO₂-Sollanteile und für die Ansteuerung des Stellgliedes oder der Stellglieder wenigstens eine der folgenden Größen und/ oder wenigstens eines der nachfolgenden Bestimmungsmodelle herangezogen wird:
- die gesamte Abgasmenge,
- Kohlenwasserstofflconzentration im Abgas vor dem Katalysator mit NO-Oxidationsaktivität,
- die Rohemission von NO und/oder NOx,
- die Rohemission der zu verringernden Abgasbestandteile,
- die maximal zulässige Restemission der zu verringernden Abgasbestandteile stromab der Abgasnachbehandlung,
- die maximal zulässige Restemission von NO₂ stromab der Abgasnachbehandlung,
- die maximal zulässige Restkonzentration der zugegebenen Stoffe stromab des Katalysators mit NO-Oxidationsaktivität,
- die maximal zulässige Restemission der zugegebenen Stoffe stromab des Nachbehandlungssystems,
- die Katalysatortemperaturen,
- die Abgastemperaturen,
- das Katalysatormodell zur Bestimmung der NO₂-Umsätze im Katalysator mit NO-Oxidationsaktivität,
- das Katalysatormodell zur Bestimmung der Umsatzraten der in der Abgasnachbehandlung zu verringernden Abgasbestandteile,
- die Motordrehzahl,
- der Ladedruck,
- die Kraftstoffmenge,
- die Katalysatoralterung über die Laufzeit,
- die NO₂-Istkozentration und/ oder der NO₂-Istanteil nach dem Katalysator mit NO-Oxidationsaktivität,
- die NO₂-Restkonzentration und/ oder der NO₂-Restanteil des Abgases stromab des Abgasnachbehandlungssystems.

10. Verfahren nach Anspruch 9, **dadurch gekennzeichnet, dass** die NO₂-Istkonzentration und/oder der NO₂-Istanteil und/ oder die NO₂-Restkonzentration und/ oder der NO₂-Restanteil mittels eines oder mehrerer Sensoren ermittelt wird.

11. Verfahren nach den Ansprüchen 9 oder 10, **dadurch gekennzeichnet, dass** die Bestimmung der NO₂-Istkonzentration und/oder des NO₂-Istanteils im Abgasstrom zwischen dem Katalysator mit NO-Oxidationsaktivität und der nachfolgenden Anordnung zur Abgasnachbehandlung erfolgt.

12. Verfahren nach den Ansprüchen 9 oder 10, **dadurch gekennzeichnet, dass** die Bestimmung der NO₂-Restkonzentration und/oder des NO₂-Restanteils im Abgasstrom stromab zu der Anordnung zur Abgasnachbehandlung erfolgt.

13. Verfahren nach einem der Ansprüche 9 bis 11, **dadurch gekennzeichnet, dass** die NO₂-Istkonzentration und/oder der NO₂-Istanteil als Istwert in einem geschlossenen Regelkreis dienen und der Regelkreis durch kontinuierlichen Istwert-Sollwert-Vergleich und kontinuierliches Nachführen des Stellglieds oder der Stellglieder zur Variation der Menge der zuzuführenden Stoffe den NO₂-Sollwert einstellt.

14. Verfahren nach einem der Ansprüche 9, 10 oder 12, **dadurch gekennzeichnet, dass** die NO₂-Restkonzentration und/oder der NO₂-Restanteil als Istwert in einem geschlossenen Regelkreis dienen und der Regelkreis durch kontinuierlichen Istwert-Sollwert-Vergleich und kontinuierliches Nachführen des Stellglieds oder der Stellglieder zur Variation der Menge der zuzuführenden Stoffe, den NO₂-Sollwert einstellt.

15. Verfahren nach einem der vorhergehenden Ansprüche, **dadurch gekennzeichnet, dass** zur Bestimmung der Kohlenwasserstofflconzentration im Abgas ein Sensor eingesetzt wird.

16. Verfahren nach Anspruch 9, **dadurch gekennzeichnet, dass** die Kohlenwasserstoffkonzentration als Istwert in einem geschlossenen Regelkreis dient und der Regelkreis durch kontinuierlichen Istwert-Sollwert-Vergleich und kontinuierliches Nachführen des Stellglieds oder der Stellglieder zur Variation der Menge der zuzuführenden Stoffe, den NO₂-Sollwert einstellt.

17. Verfahren nach den Ansprüchen 9 oder 16, **dadurch gekennzeichnet, dass** der Sensor zur Ermittlung der Kohlenwasserstofflconzentration zwischen dem Katalysator mit NO-Oxidationsaktivität und der Anordnung für die Abgasnachbehandlung angeordnet ist.

18. Verfahren nach den Ansprüchen 9 oder 16, **dadurch gekennzeichnet, dass** der Sensor zur Ermittlung der Kohlenwasserstofflconzentration stromab zu der Anordnung für die Abgasnachbehandlung angeordnet ist.

## Claims

1. Method of reducing undesired NO₂ emissions of internal combustion engines that operate with excess air and are equipped in their exhaust gas branch with at least one catalytic converter with NO oxidation activity, the catalytic converter with NO oxidation activity serving to increase the NO₂ content in the exhaust gas of the internal combustion engine for subsequent exhaust gas aftertreatment processes, **characterised in that**, during operation of the internal combustion engine, and adapted to the respective operating point of the internal combustion engine and the state of the catalytic converter with NO oxidation activity, the content of materials that compete with the NO oxidation is varied in such a way that downstream of the catalytic converter with NO oxidation activity only that desired NO₂ content is present in the exhaust gas which is required for the subsequent exhaust gas aftertreatment.

2. Method according to Claim 1, **characterised in that** the catalytic converter with NO oxidation activity contains platinum and/or platinum oxide as an active component.

3. Method according to Claims 1 or 2, **characterised in that** the variation of the content of materials is effected via the internal combustion engine.

4. Method according to Claims 1 or 2, **characterised in that** the variation of the content of materials is effected by adding the materials into the exhaust gas of the internal combustion engine downstream of the internal combustion engine and upstream of the catalytic converter with NO oxidation activity.

5. Method according to one of the preceding claims, **characterised in that** the materials are hydrocarbons.

6. Method according to one of the preceding claims, **characterised in that** the hydrocarbons are unburnt fuel.

7. Method according to one of the preceding claims, **characterised in that** the hydrocarbon concentration in the exhaust gas of the internal combustion engine is altered by variation of engine parameters, such as beginning of injection, and/or injection pressure and/or EGR rate and/or position of a throttle valve on the suction side and/or reduced injections.

8. Method according to one of the preceding claims, **characterised in that** the desired NO₂ contents are determined in an electronic control unit with the aid of sensors and/or calculations and/or maps, and the actuators of the electronic control unit are controlled in accordance therewith, the proportion of the material in the exhaust gas upstream of the catalytic converter with NO oxidation activity being variable by means of the actuators in such a way that the desired NO₂ value is adjusted downstream of the catalytic converter with NO oxidation activity.

9. Method according to one of the preceding claims, **characterised in that**, for the determination of the desired NO₂ contents and for the control of the actuator or actuators, at least one of the following parameters and/or at least one of the following determination models is used:
- the total quantity of exhaust gas,
- hydrocarbon concentration in the exhaust gas upstream of the catalytic converter with NO oxidation activity,
- the raw emission of NO and/or NOx,
- the raw emission of the exhaust gas constituents that are to be reduced,
- the maximum permissible residual emission of the exhaust gas constituents that are to be reduced downstream of the exhaust gas aftertreatment,
- the maximum permissible residual emission of NO₂ downstream of the exhaust gas aftertreatment,
- the maximum permissible residual concentration of the added materials downstream of the catalytic converter with NO oxidation activity,
- the maximum permissible residual emission of the added materials downstream of the aftertreatment system,
- the catalytic converter temperatures,
- the exhaust gas temperatures,
- the catalytic converter model for determination of NO₂ conversions in the catalytic converter with NO oxidation activity,
- the catalytic converter model for determination of conversion rates of the exhaust gas constituents that are to be reduced in the exhaust gas aftertreatment,
- the speed of the engine,
- the boost pressure,
- the quantity of fuel,
- the catalytic converter ageing over running time,
- the actual NO₂ concentration and/or the actual NO₂ content downstream of the catalytic converter with NO oxidation activity,
- the residual NO₂ concentration and/or the residual NO₂ content of the exhaust gas downstream of the exhaust gas aftertreatment system.

10. Method according to Claim 9, **characterised in that** the actual NO₂ concentration and/or the actual NO₂ content and/or the residual NO₂ concentration and/or the residual NO₂ content is determined by means of one or more sensors.

11. Method according to Claims 9 or 10, **characterised in that** determination of the actual NO₂ concentration and/or the actual NO₂ content in the exhaust gas stream is effected between the catalytic converter with NO oxidation activity and the following arrangement for the exhaust gas aftertreatment.

12. Method according to Claims 9 or 10, **characterised in that** determination of the residual NO₂ concentration and/or the residual NO₂ content in the exhaust gas stream is effected downstream of the arrangement for the exhaust gas aftertreatment.

13. Method according to one of Claims 9 to 11, **characterised in that** the actual NO₂ concentration and/or the actual NO₂ content serves as an actual value in a closed control loop, and by continuous comparison of actual value and desired value and continuous adjustment of the actuator or actuators for variation of the quantity of the materials to be added, the control loop adjusts the desired NO₂ value.

14. Method according to one of Claims 9, 10 or 12, **characterised in that** the residual NO₂ concentration and/or the residual NO₂ content serve as an actual value in a closed control loop, and by continuous comparison of actual value and desired value and continuous adjustment of the actuator or actuators for variation of the quantity of the materials to be added, the control loop adjusts the desired NO₂ value.

15. Method according to one of the preceding claims, **characterised in that** a sensor is used to determine the hydrocarbon concentration in the exhaust gas.

16. Method according to Claim 9, **characterised in that** the hydrocarbon concentration serves as an actual value in a closed control loop, and by continuous comparison of actual value and desired value and continuous adjustment of the actuator or actuators for variation of the quantity of the materials to be added, the control loop adjusts the desired NO₂ value.

17. Method according to Claims 9 or 16, **characterised in that** for determination of the hydrocarbon concentration, the sensor is arranged between the catalytic converter with NO oxidation activity and the arrangement for the exhaust gas aftertreatment.

18. Method according to Claims 9 or 16, **characterised in that** for determination of the hydrocarbon concentration, the sensor is arranged downstream of the arrangement for the exhaust gas aftertreatment.

## Revendications

1. Procédé de réduction d'émissions indésirables de NO₂ de moteurs à combustion interne fonctionnant avec un excédent d'air et équipés, dans leur système d'échappement, d'au moins un catalyseur à action oxydative du NO, le catalyseur à action oxydative du NO servant à augmenter la fraction de NO₂ dans les gaz d'échappement du moteur à combustion interne pour les procédés de retraitement des gaz d'échappement en aval,
**caractérisé en ce que**
pendant le fonctionnement du moteur à combustion interne, on fait varier la fraction de substances contribuant à l'oxydation du NO de manière adaptée au point de fonctionnement respectif du moteur à combustion interne et à l'état du catalyseur à action oxydative du NO de manière à ce qu'en aval de celui-ci, seule la fraction théorique de NO₂ nécessaire au retraitement des gaz d'échappement subséquent soit présente dans les gaz d'échappement.

2. Procédé selon la revendication 1,
**caractérisé en ce que**
le catalyseur à action oxydative du NO contient, comme composant actif, du platine et/ ou de l'oxyde de platine.

3. Procédé selon les revendications 1 ou 2,
**caractérisé en ce qu'**
on fait varier la fraction de substances par l'intermédiaire du moteur à combustion interne

4. Procédé selon les revendications 1 ou 2,
**caractérisé en ce qu'**
on fait varier la fraction de substances en les ajoutant aux gaz d'échappement du moteur à combustion interne en aval du moteur à combustion interne et en amont du catalyseur à action oxydative du NO.

5. Procédé selon l'une quelconque des revendications précédentes,
**caractérisé en ce que**
les substances sont des hydrocarbures.

6. Procédé selon l'une quelconque des revendications précédentes,
**caractérisé en ce que**
les hydrocarbures sont du carburant imbrûlé.

7. Procédé selon l'une quelconque des revendications précédentes,
**caractérisé en ce qu'**
on modifie la concentration en hydrocarbures dans les gaz d'échappement du moteur à combustion interne en faisant varier les paramètres moteur tels que le début de l'injection et/ou la pression d'injection et/ou le taux d'AGR et/ou la position d'un volet d'étranglement du côté admission et/ou les injections étagées.

8. Procédé selon l'une quelconque des revendications précédentes,
**caractérisé en ce qu'**
on détermine les fractions théoriques de NO₂ dans une unité de commande électronique à l'aide de capteurs et/ou de calculs et/ou de cartographies et on commande les actionneurs de l'unité de commande électronique en conséquence, les actionneurs permettant de faire varier la fraction de substances dans les gaz d'échappement avant le catalyseur à action oxydative du NO, de manière à avoir la valeur de consigne du NO₂ après le catalyseur à action oxydative du NO.

9. Procédé selon l'une quelconque des revendications précédentes,
**caractérisé en ce que**
pour déterminer les fractions théoriques de NO₂ et pour commander l'actionneur ou les actionneurs, on utilise au moins l'une des grandeurs suivantes et/ou au moins l'un des modèles de détermination ci-dessous :
- la quantité totale de gaz d'échappement,
- la concentration en hydrocarbures dans les gaz d'échappement avant le catalyseur à action oxydative du NO,
- l'émission brute de NO et/ ou de NOx,
- l'émission brute des fractions de gaz d'échappement à réduire,
- l'émission résiduelle maximale admissible des fractions de gaz d'échappement à réduire en aval du retraitement des gaz d'échappement,
- l'émission résiduelle maximale admissible de NO₂ en aval du retraitement des gaz d'échappement,
- la concentration résiduelle maximale admissible des substances ajoutées en aval du catalyseur à action oxydative du NO,
- l'émission résiduelle maximale admissible des substances ajoutées en aval du système de retraitement,
- les températures du catalyseur,
- les températures des gaz d'échappement,
- le modèle de catalyseur pour déterminer les conversions de NO₂ dans le catalyseur à action oxydative du NO,
- le modèle de catalyseur pour déterminer les taux de conversion des constituants des gaz d'échappement à réduire dans le système de retraitement des gaz d'échappement,
- le régime moteur,
- la pression de charge,
- la quantité de carburant,
- le vieillissement du catalyseur sur la durée de fonctionnement,
- la concentration réelle en NO₂ et/ou la fraction réelle de NO₂ après le catalyseur à action oxydative du NO,
- la concentration résiduelle de NO₂ et/ou la fraction résiduelle de NO₂ des gaz d'échappement en aval du système de retraitement des gaz d'échappement.

10. Procédé selon la revendication 9,
**caractérisé en ce qu'**
on détermine la concentration réelle en NO₂ et/ou la fraction réelle de NO₂ et/ou la concentration résiduelle en NO₂ et/ou la fraction résiduelle de NO₂ au moyen d'un ou plusieurs capteurs.

11. Procédé selon les revendications 9 ou 10,
**caractérisé en ce qu'**
on détermine la concentration réelle en NO₂ et/ou la fraction réelle de NO₂ dans le flux de gaz d'échappement entre le catalyseur à action oxydative du NO et le dispositif de retraitement des gaz d'échappement en aval.

12. Procédé selon les revendications 9 ou 10,
**caractérisé en ce qu'**
on détermine la concentration résiduelle en NO₂ et/ou la fraction résiduelle de NO₂ dans le flux de gaz d'échappement en aval du dispositif de retraitement des gaz d'échappement.

13. Procédé selon l'une quelconque des revendications 9 à 11,
**caractérisé en ce que**
la concentration réelle en NO₂ et/ou la fraction réelle de NO₂ servent de valeur réelle dans une boucle de régulation qui ajuste la valeur de consigne du NO₂ en comparant en continu la valeur réelle et la valeur de consigne, et en asservissant en continu l'actionneur ou les actionneurs pour faire varier la quantité de substances à acheminer.

14. Procédé selon l'une quelconque des revendications 9, 10 ou 12,
**caractérisé en ce que**
la concentration résiduelle en NO₂ et/ou la fraction résiduelle de NO₂ servent de valeur réelle dans une boucle de régulation qui ajuste la valeur de consigne du NO₂ en comparant en continu la valeur réelle et la valeur de consigne, et en asservissant en continu l'actionneur ou les actionneurs pour faire varier la quantité de substances à acheminer.

15. Procédé selon l'une quelconque des revendications précédentes,
**caractérisé en ce qu'**
on utilise un capteur pour déterminer la concentration en hydrocarbures.

16. Procédé selon la revendication 9,
**caractérisé en ce que**
la concentration en hydrocarbures sert de valeur réelle dans une boucle de régulation qui ajuste la valeur de consigne du NO₂ en comparant en continu la valeur réelle et la valeur de consigne, et en asservissant en continu l'actionneur ou les actionneurs pour faire varier la quantité de substances à acheminer.

17. Procédé selon les revendications 9 ou 16,
**caractérisé en ce que**
le capteur pour la détermination de la concentration en hydrocarbures est disposé entre le catalyseur à action oxydative du NO et le dispositif de retraitement des gaz d'échappement.

18. Procédé selon les revendications 9 ou 16,
**caractérisé en ce que**
le capteur pour la détermination de la concentration en hydrocarbures est disposé en aval du dispositif de retraitement des gaz d'échappement.
